# EUROPÄISCHE PATENTSCHRIFT

(11) **EP 1 329 580 B1**
(45) Veröffentlichungstag und Bekanntmachung des Hinweises auf die Patenterteilung: **08.07.2009**
(21) Anmeldenummer: 02028981.5
(22) Anmeldetag: 27.12.2002
(51) Int. Cl.: E05D 5/02, A47K 3/36

(54) **Beschlagelement für Glasscheiben**
Hinge element for glass panels
Elément de charnière pour panneaux vitrés

(30) Priorität: 30.10.2002 DE 20216811 U; 02.01.2002 DE 20200036 U
(43) Veröffentlichungstag der Anmeldung: 23.07.2003
(73) Patentinhaber: Dontenville, Denis, 67380 Lingolsheim (FR); Mury, Marie-Louise, 67100 Strasbourg (FR); Hanratty, Paul, Milton Keynes, Bucks MK3 5TL (GB)
(72) Erfinder: Dontenville, Denis, 67380 Lingolsheim (FR); Mury, Marie-Louise, 67100 Strasbourg (FR); Hanratty, Paul, Milton Keynes, Bucks MK3 5TL (GB)
(74) Vertreter: Patentanwälte Westphal, Mussgnug & Partner

(56) Entgegenhaltungen:
- EP-A- 0 400 291
- DE-A1- 2 516 397

## Beschreibung

Die Erfindung betrifft ein Beschlagelement für Glasscheiben, insbesondere für Duschwände, gemäß dem Oberbegriff des Anspruchs 1.

Für die verschiedensten Zwecke ist es erforderlich, Beschläge an Glasscheiben anzubringen. Diese Beschläge können zur Befestigung der Glasscheibe dienen, insbesondere auch zur schwenkbaren Befestigung von Glastüren oder Glasfenstern. Ebenso können Beschläge an Glasscheiben angebracht werden, z. B. Griffe oder dergleichen.

Zum Anbringen der Beschläge an der Glasscheibe ist es bekannt, die Glasscheibe zu durchbohren und das Beschlagelement mit der Glasscheibe durch diese Bohrung zu verschrauben. Das Einbringen der Bohrung in die Glasscheibe ist fertigungstechnisch aufwendig. Außerdem befinden sich Teile des Beschlagelements auf beiden Oberflächenseiten, was störend sein kann und die Reinigung der Glasscheibe beeinträchtigt.
Weiter ist es bekannt, Beschlagelemente auf die Glasscheibe zu kleben. Dabei ist ein Durchbohren der Glasscheibe nicht notwendig. Das aufgeklebte Beschlagelement befindet sich nur auf einer Oberflächenseite der Glasscheibe, während die gegenüberliegende Oberfläche völlig frei bleibt. Die für das Aufkleben von Beschlagelementen verwendeten Klebstoffe verlieren jedoch unter der Einwirkung von Feuchtigkeit und insbesondere von Wasserdampf im Laufe der Zeit ihre Haftfähigkeit, so daß sich das Aufkleben von Beschlagelementen weniger für Anwendungen eignet, bei welchen die Klebeverbindung einer stärkeren Belastung ausgesetzt ist. Insbesondere eignet sich das Aufkleben nicht für die Befestigung von Beschlägen an Duschwänden, da dort die Klebverbindung im besonderen Maße dem Einfluß von Wasserdampf ausgesetzt ist.

Aus der 2P-A-0400291 ist ein Beschlagelement für Glasscheiben bekannt, welches nur einseitig auf die Glasscheibe aufgeklebt wird, so dass die Glasscheibe zur Befestigung des Beschlagelements nicht durchbohrt werden muss. Zur Befestigung des Beschlagelements weist das Beschlagelement eine der Glasscheibe zugewandte Wanne auf, in welche eine aushärtende Klebmasse, ein Klebeband oder eine Schmelzkleberschicht aufgenommen werden. Dabei kann in der Mitte der Wanne ein einseitig oder beidseitig klebendes Abstandsprofil angeordnet sein, um das Beschlagelement von der Glasscheibe beabstandet vorzufixieren, bis die Klebemasse ausgehärtet ist. Die Klebemasse ist dabei am Rande des Beschlagelements der Einwirkung von Feuchtigkeit und Wasserdampf ausgesetzt.

Aus der DE 25 16 397 A1 ist ein Beschlagelement bekannt, welches einseitig auf eine Glasscheibe aufklebbar ist. Ein flüssiger Klebstoff wird dabei von der Rückseite des Beschlagelements durch eine Bohrung eingespritzt und verteilt sich über ein Kanalsystem über die der Glasscheibe zugewandte Klebefläche des Beschlagelements. Auch hier ist der Klebstoff am Rand der Klebefläche der Einwirkung von Feuchtigkeit und Wasserdampf ausgesetzt.

Der Erfindung liegt die Aufgabe zugrunde, ein Beschlagelement für Glasscheiben zur Verfügung zu stellen, welches auf die Glasscheibe aufgeklebt werden kann und auch unter ungünstigen Bedingungen, insbesondere auch unter Einwirkung von Wasserdampf, eine hohe Dauerstandfestigkeit aufweist.

Diese Aufgabe wird erfindungsgemäß gelöst durch ein Beschlagelement mit den Merkmalen des Anspruchs 1.

Vorteilhafte Ausführungen und Weiterbildungen der Erfindung sind in den Unteransprüchen angegeben.

Der wesentliche Gedanke der Erfindung besteht darin, die Klebefläche, mit welcher das Beschlagelement auf die Glasscheibe aufgeklebt wird, mit einer feuchtigkeitsbeständigen Dichtung ringförmig zu umschließen. Diese Dichtung schließt somit als Dampf- und Feuchtigkeitssperre die Klebeverbindung ein, so daß auch unter ungünstigen Umgebungsbedingungen, z. B. in der hohen Luftfeuchtigkeit einer Dusche, keine Feuchtigkeit und kein Wasserdampf an die Klebeverbindung gelangt und den Klebstoff zersetzen kann.

Als Dichtungsmaterial wird vorzugsweise eine Silikon-Verbindung verwendet, die eine gute Feuchtigkeits- und Dampfbeständigkeit aufweist, eine hohe Elastizität besitzt und eine gute Verarbeitbarkeit aufweist.

Die Klebefläche wird von einem als Dampfsperre wirkenden Dichtungsring umschlossen, der zwischen der Kontaktfläche und der Glasscheibe angeordnet ist. Der vorgefertigte Dichtungsring erleichtert die Montage und das präzise Positionieren des Beschlagelementes beim Festkleben.

Der Dichtungsring ist als Ringscheibe aus einem elastisch kompressiblen Werkstoff ausgebildet. Dabei ist diese Ringscheibe vorzugsweise an beiden Scheibenflächen mit einer selbstklebenden Beschichtung versehen. Dadurch kann der Dichtungsring an dem Beschlagelement festgeklebt werden, sodass er für die Montage und Positionierung an dem Beschlagelement fixiert ist. Ebenso kann das Beschlagelement mittels des Dichtungsrings auf die Glasscheibe geklebt werden, um eine Befestigung des Beschlagelementes bei der Montage zu bewirken, bis die Klebung an der eigentlichen Klebfläche ausgehärtet ist.

Die elastische Kompressibilität des Dichtungsringes erlaubt einen festen Anpressdruck, so dass der komprimierte Dichtungsring sowohl an dem Beschlagelement als auch an der Oberfläche der Glasscheibe dicht anliegt. Die klebende Beschichtung des Dichtungsrings gewährleistet zusätzlich, dass kein Dampf und keine Feuchtigkeit zwischen den Oberflächen von Dichtungsring und Beschlagelement bzw. von Dichtungsring und Glasscheibe hindurch kriechen und damit die durch den Dichtungsring gebildete Dampfsperre überwinden kann.

In einer bevorzugten Ausbildung ist der Dichtungsring in einer in der Kontaktfläche ausgebildeten, die Klebefläche umschließenden Nut angeordnet. Die Dicke des Dichtungsringes ist dabei etwas größer als die Tiefe der Nut, sodass beim Anpressen der Kontaktfläche gegen die Oberfläche der Glasscheibe eine definierte Kompression des Dichtungsringes bewirkt wird.

In einer Ausbildung ist die Klebefläche in der Kontaktfläche vertieft ausgebildet und weist eine zu der Kontaktfläche parallele vertiefte Bodenfläche auf. Die Vertiefung der Klebefläche gegenüber der an der Glasoberfläche anliegenden Kontaktfläche definiert einen Klebespalt, der mit dem flüssigen Klebstoff ausgefüllt wird. Dadurch ist eine definierte und gleichmäßige Klebeschicht zwischen dem Beschlagelement und der Oberfläche der Glasscheibe gewährleistet, die einer optimalen Haftfähigkeit entspricht. Da die Klebfläche von der dem Beschlagelement gegenüberliegenden Seite der Glasscheibe durch die Glasscheibe hindurch sichtbar ist, ergibt sich außerdem der Vorteil, dass die gleichmäßige Dicke der Klebfläche ein ästhetisch ansprechendes Aussehen hat.

In dieser Ausbildung wird das Beschlagelement mit dem eingeklebten Dichtungsring positioniert auf die Glasscheibe aufgesetzt und mittels des Dichtungsringes festgeklebt. Der Dichtungsring wird dabei soweit komprimiert, dass die Kontaktfläche an der Oberfläche der Glasscheibe anliegt. Anschließend wird der flüssige Klebstoff durch das Beschlagelement in den Klebespalt eingeleitet, bis dieser vollständig ausgefüllt ist. Das Beschlagelement wird mit der Kontaktfläche an der Glasoberfläche anliegend gehalten, bis der Klebstoff in dem Klebespalt ausgehärtet ist. Sobald der Klebstoff in der Klebefläche ausgehärtet ist, hält dieser das Beschlagelement mit der Kontaktfläche an der Oberfläche der Glasscheibe dicht anliegend. Dadurch wird auch der Dichtungsring komprimiert gehalten, sodass er eine zuverlässig abdichtende Dampfsperre für die Klebefläche bildet. Um eine schnelle Montage zu ermöglichen, wird vorzugsweise ein flüssiger UV-härtender Klebestoff verwendet. Ist dieser in den Klebespalt eingefüllt, so kann das Aushärten durch UV-Bestrahlung durch die Glasscheibe hindurch bewirkt werden.

In einer weiteren Ausbildung wird eine Montagehilfe verwendet, die das Beschlagelement von der von Glasscheibe abgewandten Seite her übergreift und außerhalb des Umfangs des Beschlagelements auf die Glasscheibe aufgesetzt wird. Das Beschlagelement wird an seiner von der Glasscheibe abgewandten Seite durch die Montagehilfe abgestützt. Die Montagehilfe ist so dimensioniert, dass zwischen der Kontaktfläche des sich an der Montagehilfe abstützenden Beschlagelements und der Glasscheibe ein definierter Klebespalt frei bleibt.
Die Dicke dieses Klebespaltes ist dabei geringer als die Höhe, um welche der Dichtungsring über die Kontaktfläche hinausragt, so dass beim Aufsetzen des Beschlagelementes mittels der Montagehilfe der Dichtungsring komprimiert wird. Der Dichtungsring schließt dadurch einen Bereich der Kontaktfläche abdichtend ein, welcher als Klebefläche dient und zur Bildung des Klebespaltes von der Glasscheibe beabstandet ist.

Das Beschlagelement mit dem festgeklebten Dichtungsring wird mittels der Montagehilfe auf die Glasscheibe aufgesetzt und an dieser unter Kompression des Dichtungsringes festgehalten. Der flüssige Klebstoff wird in den Klebespalt zwischen der Klebefläche und der Glasscheibe eingefüllt, wobei der umschließende Dichtungsring den Klebstoff in dem Klebespalt hält. Anschließend wird der Klebstoff durch UV-Strahlung gehärtet, so dass das Beschlagelement durch den ausgehärteten Klebstoff an der Glasscheibe festgeklebt ist. Der Dichtungsring wird durch den ausgehärteten Klebstoff komprimiert zwischen dem Beschlagelement und der Glasscheibe gehalten. Die Montagehilfe kann dann entfernt werden.

In einer Weiterbildung der Erfindung wird ein Beschlagelement an der Glasscheibe angebracht, welches an seiner von der Glasscheibe abgewandten Seite eine Fügeverbindung aufweist, mit welcher das Beschlagelement mit einem anderen Bauteil zusammengefügt werden kann. Diese Fügeverbindung kann bspw. eine Schwalbenschwanz-Fügeverbindung sein. Durch diese Fügeverbindung ist es möglich, die Glasscheibe mit dem unlösbar aufgeklebten Beschlagelement lösbar mit dem weiteren Bauteil zu verbinden. Bspw. kann das Beschlagelement auf die Glastür einer Duschwand aufgeklebt werden und mittels der Fügeverbindung mit einem Schwenkbeschlag zusammenzufügen. Dies hat den Vorteil, daß das Aufkleben des Beschlagelementes einfach und ohne mechanische Belastung des Beschlagelements durchgeführt werden kann. Weiter ergibt sich der Vorteil, daß die Glastür in einfacher Weise ausgehängt und eingehängt werden kann, ohne daß irgendwelche Schraubverbindungen oder dergleichen gelöst werden müssen.

Im Folgenden wird die Erfindung anhand eines in der Zeichnung dargestellten Ausführungsbeispiels näher erläutert. Es zeigen
- Fig. 1: eine Draufsicht auf ein nicht erfindungsgemäßes Beschlagelement von der glasabgewandten Seite,
- Fig. 2: eine Seitenansicht von unten des Beschlagelements,
- Fig. 3: einen Vertikalschnitt durch das Beschlagelement,
- Fig. 4: eine Draufsicht von der glasabgewandten Seite auf ein Bauteil zur Verbindung des Beschlagelementes mit einem Schwenkbeschlag,
- Fig. 5: eine Ansicht des Bauteils von oben,
- Fig. 6: einen Vertikalschnitt durch das Bauteil,
- Fig. 7: eine Draufsicht auf die Befestigung einer Glasscheibe mittels des Beschlagelementes an einem Schwenkbeschlag,
- Fig. 8: einen diametralen Schnitt durch ein Beschlagelement gemäß der Erfindung,
- Fig. 9: eine Draufsicht auf das Beschlagelement von der Klebeseite,
- Fig. 10: im Halbschnitt das auf eine Glasscheibe aufgeklebte Beschlagelement,
- Fig. 11: in vergrößerter Darstellung die Einzelheit A der Fig. 8,
- Fig. 12: einen Figur 10 entsprechenden Halbschnitt des mittels einer Montagehilfe auf die Glasscheibe aufgesetzten Beschlagelements in einer weiteren Ausführung und
- Fig. 13: eine Figur 11 entsprechende vergrößerte Detaildarstellung der Ausführung der Fig. 12.

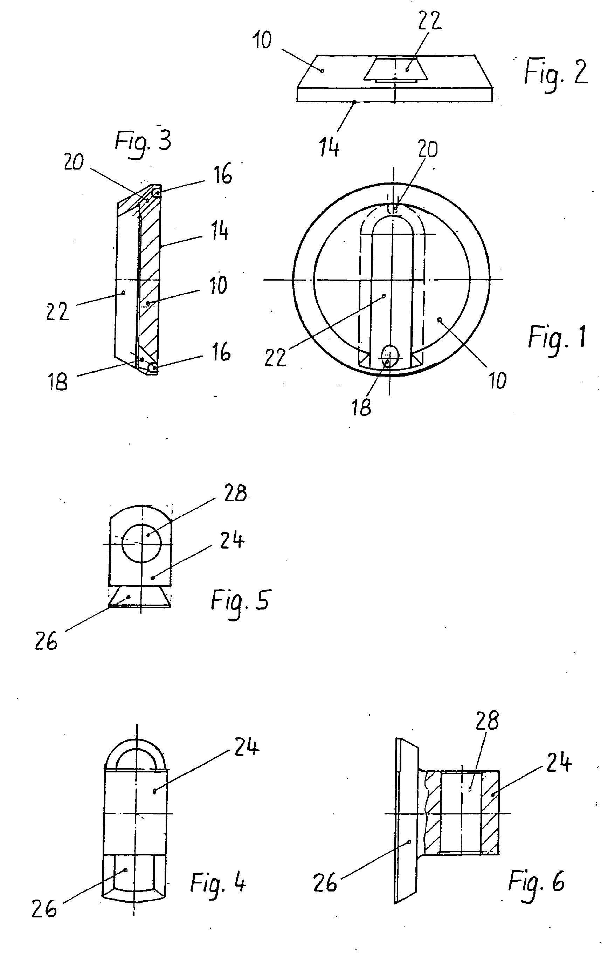

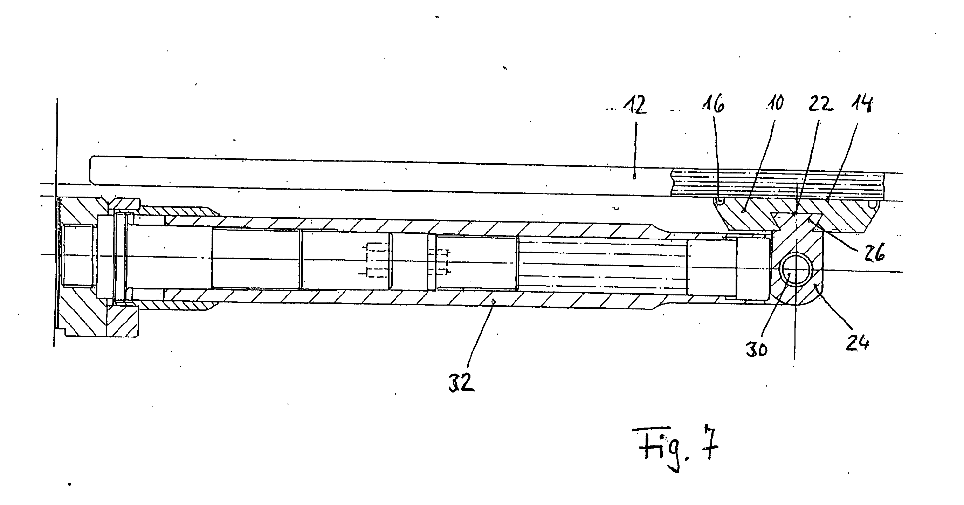

In den Figuren 1 bis 3 hat das nicht erfindungsgemäße vorzugsweise aus Metall hergestellte Beschlagelement 10 die Form einer flachen Kreisscheibe. Andere Formen als die Kreisform sind selbstverständlich ebenso möglich. Die eine kreisförmige Scheibenfläche des Beschlagelements 10 bildet die Kontaktfläche, mit welcher das Beschlagelement 10 flächig anliegend auf eine Glasscheibe 12 aufgesetzt wird, wie dies in Fig. 7 zu sehen ist. Der mittlere Bereich der Kontaktfläche bildet dabei eine Klebefläche 14, auf welche ein Klebstoff aufgetragen wird, um das Beschlagelement 10 mit der Glasscheibe 12 zu verkleben. Nahe dem Außenumfang der Kontaktfläche ist in diese eine Nut 16 eingearbeitet, die entlang dem gesamten Außenumfang der Kontaktfläche umläuft und die Klebefläche 14 ringförmig vollständig einschließt.

In einer praktischen Ausführung weist das Beschlagelement 10 bspw. einen Durchmesser von 50 mm und eine Stärke von 10 mm auf. Die Nut 16 weist eine Tiefe von 2 mm und eine radiale Breite von 2,5 mm auf und verläuft in einem radialen Abstand von bspw. etwa 0,5 mm vom Außenumfang der Kontaktfläche um, so daß die Kontaktfläche im Wesentlichen vollständig als Klebefläche 14 zur Verfügung steht.

Von der der Klebefläche 14 abgewandten Rückseite des Beschlagelements 10 führt eine Einspritzbohrung 18 von der glasabgewandten Seite des Beschlagelements 10 in die Nut 16. Wie insbesondere in Fig. 3 zu erkennen ist, verengt sich die Einspritzbohrung 18 konisch gegen die Einmündung in die Nut 16, so daß in die Einspritzbohrung 18 eine Düse eingesetzt werden kann, durch welche ein flüssiges Dichtungsmittel in die Nut 16 eingespritzt werden kann. Diametral zu der Einspritzbohrung 18 führt eine Entlüftungsbohrung 20 von der glasabgewandten Rückseite des Beschlagelements 10 durch dieses hindurch in die Nut 16.

Das Beschlagelement 10 wird mit seiner Klebefläche 14 zunächst auf die Glasscheibe 12 aufgeklebt. Sobald die Klebeverbindung fest ist, wird das flüssige Dichtungsmittel, vorzugsweise eine Silikon-Verbindung, durch die Einspritzbohrung 18 in die Nut 16 eingespritzt. Das flüssige Dichtungsmittel füllt von der Einspritzbohrung 18 ausgehend beidseitig die Nut 16 aus und verdrängt dabei die in der Nut 16 eingeschlossene Luft durch die diametral angeordnete Entlüftungsbohrung 20. Das flüssige Dichtungsmittel wird so lange durch die Einspritzbohrung 18 eingebracht, bis dieses durch die diametral angeordnete Entlüftungsbohrung 20 austritt, wodurch gewährleistet ist, daß die Nut 16 vollständig und blasenfrei mit dem flüssigen Dichtungsmittel gefüllt ist. Nach dem Aushärten des flüssigen Dichtungsmittels bildet dieses in der Nut 16 eine Flüssigkeits- und Dampfsperre, die die Klebefläche 14 vollständig dicht von der Außenumgebung abschließt.

Auf der der Klebefläche 14 entgegengesetzten glasabgewandten Seite des Beschlagelements 10 ist eine Schwalbenschwanznut 22 eingearbeitet. Die Schwalbenschwanznut 22 ist an ihrem einen Ende, in Fig. 1 dem unteren Ende, gegen den Umfang des Beschlagelements 10 hin offen. An dem anderen Ende, in Fig. 1 dem oberen Ende, führt die Schwalbenschwanznut 22 nicht vollständig bis an den Rand des Beschlagelements 10, so daß die Schwalbenschwanznut 22 dort an ihrer Stirnseite geschlossen ist.

Die Schwalbenschwanznut 22 dient dazu, das Beschlagelement 10 und damit die mit dem Beschlagelement 10 verklebte Glasscheibe 12 mit einem weiteren Bauteil 24 zusammen zu fügen. Dieses Bauteil 24 weist eine zu der Schwalbenschwanznut 22 korrespondierende Schwalbenschwanzfeder 26 auf, wie in den Fig. 4-6 zu sehen ist. Die Schwalbenschwanzfeder 26 ist so geformt, daß sie in die Schwalbenschwanznut 22 einschiebbar ist und mit ihrem Ende sich bündig in den Umfang des Beschlagelements 10 einfügt, wenn die Schwalbenschwanzfeder 26 vollständig in die Schwalbenschwanznut 22 eingeschoben ist.

In dem dargestellten Ausführungsbeispiel ist das Bauteil 24 Bestandteil eines Schwenkbeschlages und sitzt mit einer Bohrung 28 schwenkbar auf einem Lagerzapfen 30 des Schwenkbeschlages. Der Lagerzapfen 30 ist am freien Ende eines längenverstellbaren Tragarmes 32 angeordnet, der an der Wand, z. B. eines Baderaumes, angebracht wird. Die Glasscheibe 12 ist in diesem Falle als Glastür einer Duschwand ausgebildet, die zum Öffnen und Schließen um den Lagerzapfen 30 schwenkbar ist.

Das erfindungsgemäße Beschlagelement 10 kann in der oben beschriebenen Weise auf die Glasscheibe 12 der Glastür aufgeklebt werden. Nach dem Aushärten der Klebeverbindung und dem Einbringen der Dichtung in die Nut 16 kann die Glastür in den Schwenkbeschlag eingehängt werden, indem das Beschlagelement 10 mit seiner Schwalbenschwanznut 22 von oben auf die Schwalbenschwanzfeder 26 des Beschlags aufgeschoben wird. Ebenso kann die Glastür durch Anheben wieder ausgehängt werden.

Da das Beschlagelement 10 nur auf der Außenseite der Glasscheibe 12 der Glastür der Duschwand aufgeklebt ist, ist die dem Inneren der Duschkabine zugewandte Oberfläche der Glasscheibe 12 völlig frei von Beschlagteilen, so daß ein einfaches und vollständiges Reinigen der inneren Oberfläche der Glasscheibe 12 möglich ist.

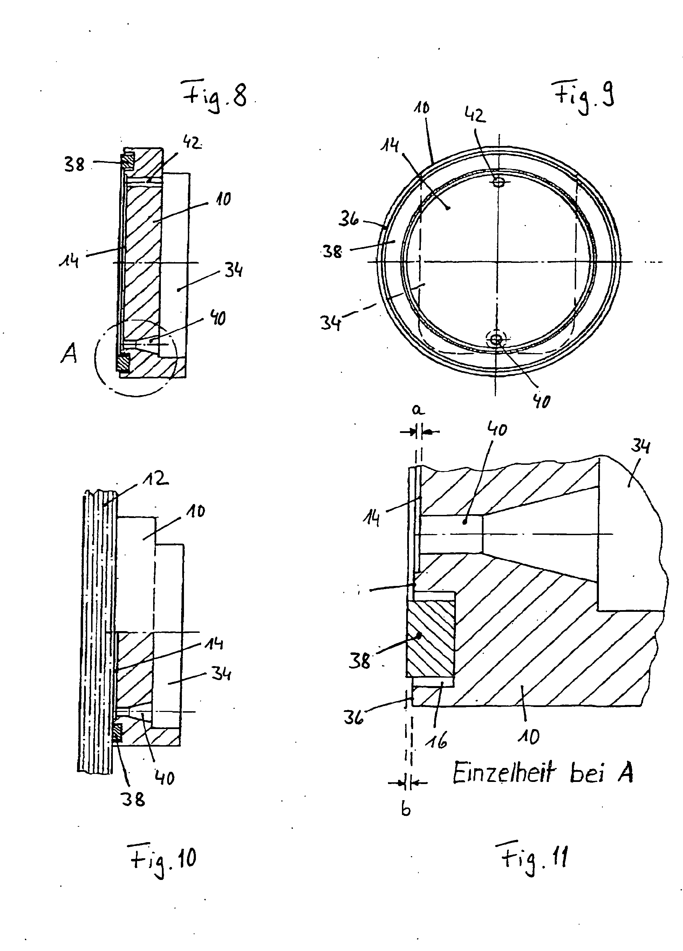

In einer in den Figuren 8 bis 11 dargestellten erfindungsgemäßen Ausführung weist das vorzugsweise aus Metall hergestellte Beschlagelement 10 eine ebene Kontaktfläche 36 auf, mit welcher das Beschlagelement 10 an der Glasscheibe 12 anliegt. Im Inneren der Kontaktfläche 36 ist eine Klebefläche 14 ausgebildet. Die Klebefläche 14 ist eine ebene Fläche, die zur Ebene der Kontaktfläche 36 parallel verläuft und gegenüber der Ebene der Kontaktfläche 36 vertieft ist. Die Tiefe a, um welche die Klebefläche 14 in die Kontaktfläche 36 eingesenkt ist, beträgt bspw. 0,05-0,15 mm. Der Außenumfang der Klebefläche 14 ist von dem Außenumfang der Kontaktfläche 36 beabstandet, sodass zwischen dem Außenumfang der Klebefläche 14 und dem Außenumfang der Kontaktfläche 36 ein umlaufender Randstreifen der Kontaktfläche 36 stehen bleibt. Bei der in der Zeichnung dargestellten kreisförmigen Ausbildung des Beschlagelements 10 ist die Klebefläche 14 als konzentrischer Kreis in der Kontaktfläche 36 ausgebildet und ein kreisringförmiger Randstreifen der Kontaktfläche 36 umschließt die Klebefläche 14, wie dies insbesondere in Fig. 9 deutlich wird.

In diesem die Klebefläche 14 umschließenden Randstreifen der Kontaktfläche 36 ist eine Nut 16 eingearbeitet, die die Klebefläche 14 umschließt und nach innen von dem Umfang der Klebefläche 14 und nach außen von dem Außenumfang der Kontaktfläche 36 beabstandet ist. In dem dargestellten Ausführungsbeispiel einer kreisförmigen Kontaktfläche 36 bildet die Nut 16 einen Kreisring, der radial zwischen dem Außenumfang der Klebefläche 14 und dem Außenumfang der Kontaktfläche 36 angeordnet und von diesen jeweils radial beabstandet ist.

In die Nut 16 wird ein Dichtungsring 38 eingesetzt, der die Form einer flachen Ringscheibe aufweist. Wie am besten in Fig. 11 zu sehen ist, ist die radiale Breite des Dichtungsringes 38 etwas geringer als die radiale Breite der Nut 16. Die Dicke des Dichtungsringes 38 ist um einen geringen Betrag b größer als die Tiefe der Nut 16. Der Dichtungsring 38 besteht aus einem feuchtigkeitsbeständigen, wasserdampfdichten und elastisch kompressiblen Kunststoff. An seinen beiden Flachseiten ist der Dichtungsring 38 mit einer Klebbeschichtung versehen.

Der Dichtungsring 38 wird mit dieser Klebbeschichtung in die Nut 16 eingeklebt, wobei er um den Betrag b über die Ebene der Kontaktfläche 36 herausragt, wie dies in den Fig. 8 und 11 zu erkennen ist.

Für die Montage des Beschlagelementes 10 an der Glasscheibe 12 wird das Beschlagelement 10 positioniert und gegen die Glasscheibe 12 gepresst. Dabei wird der Dichtungsring 38 komprimiert, bis das Beschlagelement 10 mit der Kontaktfläche 36 an der Glasscheibe 12 anliegt. Dabei wird der Dichtungsring 38 mit seiner klebenden Beschichtung an der Oberfläche der Glasscheibe 12 festgeklebt. Das Beschlagelement 10 wird in dieser Stellung, in welcher die Kontaktfläche 36 an der Glasscheibe 12 anliegt und der Dichtungsring 38 in die Nut 16 hineinkomprimiert ist, fixiert, wozu bspw. eine Schraubklemme oder dergl. verwendet werden kann.

Nun wird der zwischen der Klebefläche 14 und der Glasscheibe 12 gebildete Klebespalt mit der Dicke a mit einem flüssigen UV-härtenden Klebstoff gefüllt. Dieser Klebstoff wird durch eine Einspritzbohrung 40 eingefüllt, die nahe am Außenrand der Klebefläche 14 von der Rückseite des Beschlagelements 10 in die Klebefläche 14 führt. Diametral zu der Einspritzbohrung 40 ist eine Entlüftungsbohrung 42 vorgesehen, die ebenfalls von der Rückseite des Beschlagelementes 10 in die Klebefläche 14 führt. Da der durch die Einspritzbohrung 40 eingeleitete flüssige Klebstoff die Luft aus dem Klebspalt der Klebefläche 14 durch die Entlüftungsbohrung 42 verdrängen kann, wird der zwischen der Klebefläche 14 und der Glasscheibe 12 gebildete Hohlraum vollständig mit dem flüssigen Klebstoff ausgefüllt.

Sobald die Klebefläche 14 vollständig mit dem flüssigen Klebstoff gefüllt ist, wird der Klebstoff durch UV-Bestrahlung durch die Glasscheibe 12 hindurch ausgehärtet. Nach dem Aushärten hält die Klebeverbindung zwischen der Klebefläche 14 und der Glasscheibe das Beschlagelement 10 mit der Kontaktfläche 36 an der Glasscheibe 12 anliegend. Der Dichtungsring 38 wird dabei komprimiert gehalten, sodass er unter seiner elastischen Rückstellkraft einerseits am Boden der Nut 16 und andererseits an der Glasscheibe 12 anliegt. Der Dichtungsring 38 bildet damit eine die Klebefläche 14 und den sich darin befindenden Klebstoff vollständig umschließende Dampf- und Feuchtigkeitssperre. Da der Dichtungsring 38 sowohl an dem Boden der Nut 16 als auch an der Glasscheibe 12 unter seiner Elastizität mittels seiner klebenden Beschichtung anliegt, ist auch zuverlässig verhindert, dass Feuchtigkeit und Dampf zwischen dem Dichtungsring 38 und der Oberfläche des Beschlagelements 10 oder der Glasscheibe 12 hindurch kriechen.

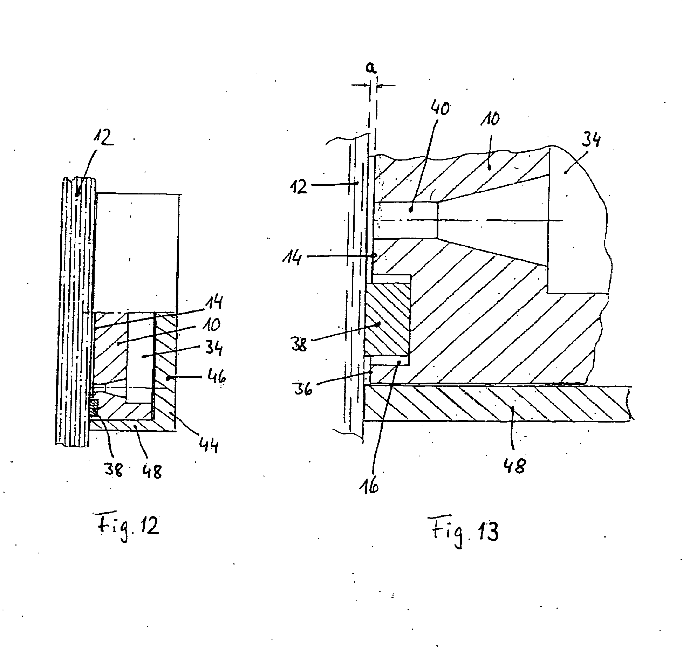

In den Figuren 12 und 13 ist eine weitere Ausführung des Beschlagelements und seiner Montage dargestellt. Soweit diese Ausführung mit der in den Figuren 8 bis 11 dargestellten zweiten Ausführung übereinstimmt, werden dieselben Bezugszeichen verwendet und auf die vorangehende Beschreibung wird Bezug genommen.

In der weiteren Ausführung ist die Kontaktfläche 36 eine durchgehend ebene Fläche, wobei auch die Klebefläche 14 in der Ebene der Kontaktfläche 36 verläuft. Zur Montage des Beschlagelements 10 an der Glasscheibe 12 wird eine Montagehilfe 44 verwendet. Die Montagehilfe 44 hat die Form eines Topfes, der von der von der Glasscheibe 12 abgewandten Seite über das Beschlagelement 10 gestülpt wird. Die Montagehilfe 44 weist dabei einen Boden 46 auf, an welchem sich das Beschlagelement 10 mit seiner von der Glasscheibe 12 bzw. der Kontaktfläche 36 abgewandten Rückseite abstützt. An dem Boden 46 sind Stützen 48 angeformt, die die Form eines umlaufenden Randes oder einzelner Stützpfosten haben können. Die Stützen 48 umgreifen das Beschlagelement 10 an dessen Außenumfang und ragen an der der Glasscheibe 12 zugewandten Seite geringfügig über die Kontaktfläche 36 des Beschlagelementes 10 hinaus, wenn dieses Beschlagelement 10 an dem Boden 46 der Montagehilfe 44 abgestützt anliegt. Die Dimensionierung ist dabei so gewählt, dass die Stützen 48 um die Länge a über die Kontaktfläche 36 hinausragen, während der unkomprimierte Dichtungsring 22 um den Betrag b über die Kontaktfläche 36 hinausragt, wobei b größer ist als a.

Die Montage des Beschlagelements 10 an der Glasscheibe 12 ergibt sich aus den Figuren 12 und 13 in folgender Weise. Zunächst wird der Dichtungsring 38 in die Nut 16 des Beschlagelements 10 eingeklebt. Das Beschlagelement 10 wird dann in die Montagehilfe 44 eingesetzt. Mittels der Montagehilfe 44 wird das Beschlagelement 10 auf der Glasscheibe 12 positioniert. Die Montagehilfe 44 wird dann gegen die Glasscheibe 12 gedrückt, bis die Montagehilfe 44 mit den Stützen 48 auf der Oberfläche der Glasscheibe 12 aufsitzt. Dabei wird der Dichtungsring 38, der zunächst um den Betrag b über die Kontaktfläche 36 hinausragt, komprimiert und an der Glasscheibe 12 festgeklebt. Die elastische Rückstellkraft des Dichtungsringes 38 drückt das Beschlagelement 10 von der Glasscheibe 12 weg und hält das Beschlagelement 10 an dem Boden 46 der Montagehilfe 44 anliegend. Dadurch wird ein definierter Klebespalt der Breite a zwischen der Oberfläche der Glasscheibe 12 und der Kontaktfläche 36 des Beschlagelementes 10 gebildet. Der von dem Dichtungsring 38 umschlossene innere Bereich der Kontaktfläche 36 bildet dabei die Klebefläche 14. Nun kann durch die Einspritzbohrung 40 der flüssige Klebstoff in den Klebespalt zwischen der Klebefläche 14 und der Glasscheibe 12 eingefüllt werden, wobei die Luft aus dem Klebespalt über die Entlüftungsbohrung 42 entweichen kann. Sobald der durch die Oberfläche der Glasscheibe 12, die Klebefläche 14 und den Dichtungsring 38 definierte Klebespalt vollständig mit dem flüssigen Klebstoff ausgefüllt ist, wird dieser mittels UV-Strahlung durch die Glasscheibe 12 hindurch bestrahlt und ausgehärtet. Sobald der Klebstoff ausgehärtet ist, ist die Klebefläche 14 fest mit der Glasscheibe 12 verklebt und die Montagehilfe 44 kann entfernt werden. Die Klebeverbindung zwischen der Klebefläche 14 und der Glasscheibe 12 hält das Beschlagelement 10 an der Glasscheibe 12 fest und hält den Dichtungsring 38 elastisch komprimiert.

### Bezugszeichenliste

- 10: Beschlagelement
- 12: Glasscheibe
- 14: Klebefläche
- 16: Nut
- 18: Einspritzbohrung
- 20: Entlüftungsbohrung
- 22: Schwalbenschwanznut
- 24: Bauteil
- 26: Schwalbenschwanzfeder
- 28: Bohrung
- 30: Lagerzapfen
- 32: Tragearm
- 34: Aufnahme
- 36: Kontaktfläche
- 38: Dichtungsring
- 40: Einspritzbohrung
- 42: Entlüftungsbohrung
- 44: Montagehilfe
- 46: Boden
- 48: Stützen

## Patentansprüche

1. Beschlagelement für Glasscheiben, insbesondere von Duschwänden, mit einer im zusammengebauten Zustand an der Oberfläche der Glasscheibe (12) flächig anliegenden Kontaktfläche,
wobei die Kontaktfläche eine Klebefläche (14) aufweist, die von einer Dichtung des Beschlagelements ringförmig umschlossen ist,
**dadurch gekennzeichnet, dass** die Dichtung ein die Klebefläche (14) umschließender feuchtigkeitsbeständiger, als Dampfsperre wirkender Dichtungsring (38) ist, der im zusammengebauten Zustand zwischen der Kontaktfläche (36) und der Glasscheibe (12) angeordnet ist und aus einem elastisch kompressiblen Werkstoff besteht.

2. Beschlagelement nach Anspruche 1,
**dadurch gekennzeichnet, dass** in der Kontaktfläche eine Nut (16) ausgebildet ist, die die Klebefläche (14) umschließt und in die der Dichtungsring (38) eingesetzt ist.

3. Beschlagelement nach Anspruch 1 oder 2,
**dadurch gekennzeichnet, dass** der Dichtungsring (38) als Ringscheibe ausgebildet ist und an seinen beiden Flachseiten eine klebende Beschichtung aufweist.

4. Beschlagelement nach Anspruch 2,
**dadurch gekennzeichnet, dass** die Dicke des Dichtungsringes (38) etwas größer (Betrag b) ist als die Tiefe der Nut (16).

5. Beschlagelement nach einem der Ansprüche 1 bis 4,
**dadurch gekennzeichnet, dass** bei auf die Glasscheibe (12) aufgesetztem Beschlagelement (10) die Klebefläche (14) zur Bildung eines mit dem Klebstoff zu füllenden Klebespaltes in einem Abstand (Betrag a) von der Glasscheibe (12) gehalten wird.

6. Beschlagelement nach Anspruch 5,
**dadurch gekennzeichnet, dass** eine Montagehilfe (44) vorgesehen ist, die mit Stützen (48) außerhalb des Umfangs des Beschlagelements (10) an der Glasscheibe (12) abstützbar ist und die das Beschlagelement (10) an dessen von der Glasscheibe (12) abgewandten Seite abstützt, wobei die Stützen (48) so dimensioniert sind, dass die Klebefläche (14) des an der Montagehilfe (44) abgestützen Beschlagelements (10) in dem den Klebespalt bestimmenden Abstand (Betrag a) von der Glasscheibe (10) gehalten wird.

7. Beschlagelement nach Anspruch 6,
**dadurch gekennzeichnet, dass** der Abstand (Betrag a) der Klebefläche (14) von der Glasscheibe (12) kleiner ist als die Höhe (Betrag b) um welche der Dichtungsring (38) über die Kontaktfläche (36) des Beschlagelements (10) hinausragt.

8. Beschlagelement nach Anspruch 5,
**dadurch gekennzeichnet, dass** eine Einspritabohrung (40) und eine Entlüftungsbohrung (42) durch das Beschlagelement (10) hindurch in die Klebefläche (14) führen.

9. Beschlagelement nach Anspruch 8,
**dadurch gekennzeichnet, dass** die Einspritzbohrung (40) und die Entlüftungsbohrung (42) diametral zueinander jeweils nahe am Außenumfang der Klebefläche (14) angeordnet sind.

10. Beschlagelement nach einem der vorhergehenden Ansprüche,
**dadurch gekennzeichnet, daß** das Beschlagelement (10) an seiner glasabgewandten Seite wenigstens eine Fügeverbindung (22, 26) zur Verbindung mit einem Bauteil (24) aufweist, welches an der Glasscheibe (12) zu befestigen ist oder an welchem die Glasscheibe (12) zu befestigen ist.

## Claims

1. Hinge element for glass panels, in particular for shower cubicles, with a contact face which, in the assembled state, rests flat against the surface of the glass panel (12),
wherein the contact face has a gluing surface (14) which is encompassed, in a ring-like manner, by a seal of the hinge element,
**characterised in that**
the seal is a moisture-resistant sealing ring (38) which encompasses the gluing surface (14) and acts as a vapour barrier, and which in the assembled state is arranged between the contact face (36) and the glass panel (12) and consists of an elastically compressible material.

2. Hinge element according to claim 1,
**characterised in that** formed in the contact face is a groove (16) which encompasses the gluing surface (14), and into which the sealing ring (38) is set.

3. Hinge element according to claim 1 or 2,
**characterised in that** the sealing ring (38) is designed as an annular disk and has an adhesive coating on its two flat surfaces.

4. Hinge element according to claim 2,
**characterised in that** the thickness of the sealing ring (38) is somewhat greater (amount b) than the depth of the groove (16).

5. Hinge element according to one of the claims 1 to 4,
**characterised in that** when the hinge element (10) is fitted to the glass panel (12), the gluing surface (14) is held at a distance (amount a) from the glass panel (12), to form an adhesive gap that is to be filled with the adhesive.

6. Hinge element according to claim 5,
**characterised in that** a fitting aid (44) is provided which can be supported on the glass panel (12), with supports (48), outside the periphery of the hinge element (10), and which supports the hinge element (10) on its side facing away from the glass panel (12),
wherein the supports (48) are dimensioned such that the gluing surface (14) of the hinge element (10) that is supported on the fitting aid (44) is held at the distance (amount a) from the glass panel (10) that determines the adhesive gap.

7. Hinge element according to claim 6,
**characterised in that** the distance (amount a) of the gluing surface (14) from the glass panel (12) is smaller than the height (amount b) by which the sealing ring (38) projects beyond the contact face (36) of the hinge element (10).

8. Hinge element according to claim 5,
**characterised in that** an injection hole (40) and a venting hole (42) lead through the hinge element (10) into the gluing surface (14).

9. Hinge element according to claim 8,
**characterised in that** the injection hole (40) and the venting hole (42) are arranged diametrically to one another, in each case close to the outer periphery of the gluing surface (14).

10. Hinge element according to one of the preceding claims,
**characterised in that** on its side facing away from the glass, the hinge element (10) has at least one joining connection (22, 26) for connection to a component (24) that is to be fastened to the glass panel (12), or to which the glass panel (12) is to be fastened.

## Revendications

1. Elément de charnière pour des vitres notamment des parois de douche, qui a une surface de contact appliquée à plat contre la surface de la vitre (12), à l'état monté,
la surface de contact a une surface adhésive (14) entourée suivant une forme annulaire par un joint de l'élément de charnière,
**caractérisé en ce que**
le joint est un joint d'étanchéité (38) qui fonctionne comme barrière de vapeur résistant à l'humidité et il entoure la surface adhésive (14),
ce joint d'étanchéité, entre la surface de contact (36) et la vitre (12) à l'état monté, est en une matière élastique susceptible d'être comprimée.

2. Elément de charnière selon la revendication 1,
**caractérisé en ce qu'**
une rainure (16), réalisée dans la surface de contact, entoure la surface adhésive (14) et reçoit le joint d'étanchéité (38).

3. Elément de charnière selon la revendication 1 ou 2,
**caractérisé en ce que**
le joint d'étanchéité (38) est un anneau plat dont les deux côtés plats portent un revêtement adhésif.

4. Elément selon la revendication 2,
**caractérisé en ce que**
l'épaisseur du joint d'étanchéité (38) est légèrement supérieure (dimension b) à la profondeur de la rainure (16).

5. Elément selon les revendications 1 à 4,
**caractérisé en ce que**
pour l'élément de charnière (10) appliqué contre la vitre (12), la surface adhésive (14) est tenue à la distance (distance a) de la vitre (12) pour former un intervalle rempli d'adhésif.

6. Elément de charnière selon la revendication 5,
**caractérisé en ce que**
un dispositif de montage (44) s'appuie contre la vitre (12), par des appuis (48) au-delà de la périphérie de l'élément de charnière (10) qu'il soutient contre le côté opposé à celui de la vitre (12),
les appuis (48) étant dimensionnés pour que la surface adhésive (14) de l'élément de charnière (10) appuyé contre le dispositif de montage (44) soit écartée de la vitre (10) de la distance (distance a) qui définit l'intervalle d'adhésif.

7. Elément de charnière selon la revendications 6,
**caractérisé en ce que**
la distance (distance a) entre la surface adhésive (14) et la vitre (12) est inférieure à la hauteur (distance b) suivant laquelle le joint d'étanchéité (38) dépasse de la surface de contact (36) de l'élément de charnière (10).

8. Elément de charnière selon la revendication 5,
**caractérisé par**
un perçage d'injection (40) et un perçage d'évacuation d'air (42) traversant l'élément de charnière (10) et arrivant à la surface adhésive (14).

9. Elément de charnière selon la revendication 8,
**caractérisé en ce que**
le perçage d'injection (40) et le perçage d'évacuation d'air (42) sont dans une position diamétralement opposée, chaque fois à proximité de la périphérie extérieure de la surface adhésive (14).

10. Elément de charnière selon les revendications précédentes,
**caractérisé en ce que**
le côté de l'élément de charnière (10) opposé à celui tourné vers la vitre, comporte au moins une liaison d'assemblage (22, 26) pour être relié à un composant (24) qui peut être fixé à la vitre (12) ou auquel il faut fixer la vitre (12).
